(19) Europäisches Patentamt
European Patent Office
Office européen des brevets

(11) **EP 3 383 027 A1**

(12) **EUROPÄISCHE PATENTANMELDUNG**

(43) Veröffentlichungstag:
**03.10.2018 Patentblatt 2018/40**

(51) Int Cl.:
***H04N 5/359*** *(2011.01)*

(21) Anmeldenummer: **18165190.2**

(22) Anmeldetag: **29.03.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **31.03.2017 DE 102017003170**

(71) Anmelder: **Max-Planck-Gesellschaft zur Förderung der Wissenschaften e.V. 80539 München (DE)**

(72) Erfinder:
• **TABEL, Stefan**
  **82340 Feldafing (DE)**
• **WEIKL, Korbinian**
  **81543 München (DE)**

(74) Vertreter: **Bach, Alexander Mitscherlich PartmbB Patent- und Rechtsanwälte Sonnenstraße 33 80331 München (DE)**

(54) **VERFAHREN UND VORRICHTUNG ZUR KORREKTUR VON SMEAR-ARTEFAKTEN**

(57) 1. Verfahren und Vorrichtung zur Korrektur von Readout-Smear-Artefakten.

2.1. Bekannte Verfahren zur Korrektur von Smear-Artefakten, die beim Auslesen von CCD-Sensoren auftreten, benötigen viel Rechenzeit; ihre Implementierung ist umständlich. Das neue Verfahren soll einfachere und effizientere Implementierungen ermöglichen.

2.2 Um eine effiziente Berechnung eines korrigierten Bildes zu ermöglichen, werden die ausgelesenen Bildwerte und die zur verwendenden Korrekturwerte zunächst mit einer geeigneten Transformation in einen Frequenzbereich überführt, in welchem die transformierten Bildwerte dann mittels der transformierten Korrekturwerte durch Anwendung einer Faltungsoperation korrigiert werden. Die Faltung kann parallel berechnet werden. Ferner wird ein Vefahren zur näherungsweisen Berechnung von Korrekturen für aperiodischen Readout-Smear bereit gestellt. Unterschiedliche effiziente Implementierungen in Hardware werden vorgestellt.

2.3 Das Verfahren und die Vorrichtung eignen sich aufgrund ihrer Effizienz insbesondere für wissenschaftliche Sensoren, die hohe Füllfaktoren der Pixel erfordern, jedoch auch für Bildsensoren, die in Smartphones verwendet werden.

Figur 4

**Beschreibung**

Die Erfindung bezieht sich auf Verfahren und Vorrichtung, welche Bilder von fram-store oder full-frame Charge-Coupled-Devices (CCDs) von Readout-Smear korrigieren, und dabei die Korrekturen im Frequenzbereich errechnet.

CCDs sind Bildsensoren, die aus einfallenden Photonen Ladungen erzeugen und die erzeugte Ladung zur Evakuierung des Sensors verschieben. Framestore CCDs verschieben die in einem Pixel generierte Ladung durch benachbarte Pixel in einen abgedunkelten framestore-Bereich, so dass die Analog-zu-Digital-Wandlung eines Fotos mit der Belichtung des folgenden Fotos parallelisiert werden kann. Full-frame CCDs verschieben die Ladungen direkt in einen Verstärker anstatt in einen framestore-Bereich, sodass keine Parallelisierung stattfindet.

In full-frame- und framestore-CCDs werden die Ladungen durch benachbarte Pixel geschoben. Enthält die Kamera keinen Shutter, so werden die verschobenen Ladungen während des Verschiebens durch benachbarte Pixel weiter belichtet, wodurch der Bildfehler des Readout-Smears entsteht.

Aktuelle Kameras mit Framestore-CCDs erlauben eine hohe Kadenz, geringes Rauschen, große Pixel und wenige zusätzliche Strukturen auf einem Sensor. Allerdings können Framestore-CCDs nicht elektronisch geshuttert werden. Viele framestore-CCDs sind zu schnell für mechanische Shutter, was dann eine algorithmische Korrektur von resultierendem Readout-Smear notwendig machen kann.

In wissenschaftlichen Kameras kann eine Korrektur von mehreren hundert Bildern pro Sekunde erforderlich werden. Bei Konsumenten-Kameras ist es ferner gewünscht, ein Foto in möglichst geringer Latenz korrigiert anzuzeigen. Daher besteht ein Interesse an Verfahren, welche die Readout-Smear Korrektur mit geringerer Komplexität und somit in kürzerer Zeit bestimmen. Eine Korrektur mit geringer Komplexität resultiert darüber hinaus in einem geringeren Energieverbrauch der Korrektur.

US 8169515 B2 zeigt ein Verfahren, welche den Fehler Readout-Smear mit Matrix-Vektor-Multiplikationen korrigiert. Powell et al. (K. Powell, D. Chana, D. Fish, and C. Thompson, "Restoration and frequency analysis of smeared CCD images.", Applied Optics, vol. 38, no. 8, pp. 1343-1347, 1999) betrachtet den Standard-Fall des Readout-Smear. Ein Framestore CCD wird in 4 Zyklen von einem Bild durchlaufen. Das Bild mit Null-Werten wird im Zyklus des Einschiebens in den photosensitiven Bereich eingeschoben. Dabei kommt es zu einem Fehler durch Belichtung während des Einschiebens, sodass eine Ladung in jedem Transfer-Takt erzeugt wird welche von dem Verhältnis delta aus Transferzeit und Belichtungszeit abhängt. Während der Belichtung befindet sich das Bild komplett im photosensitiven Bereich und wird mit der wahren Szene belichtet. Im Zyklus des Ausschiebens wird das Bild in den framestore-Bereich geschoben, wobei wiederum eine falsche Belichtung auftritt. Im Auslesezyklus befindet sich das Bild im framestore Bereich und wird digitalisiert.

Powell beschrieb den Bildfehler als Smear S, welcher immer in einer Spalte entlang der Schieberichtung dieser Spalte entsteht. Die Spalte S enthält die Bildinformation und die Degradierung durch Smear. Y ist die Spalte mit Bildinformation und ohne Smear. Powell stellte einen Zusammenhang über die zirkulante Matrix M her:

$$S = MY : \begin{pmatrix} S_0 \\ S_1 \\ S_2 \\ \vdots \\ S_{N-1} \end{pmatrix} = \begin{bmatrix} 1 & \delta & \delta & \dots & \delta \\ \delta & 1 & \delta & \dots & \delta \\ \delta & \delta & 1 & \dots & \delta \\ \vdots & \vdots & \vdots & \ddots & \vdots \\ \delta & \delta & \delta & \dots & 1 \end{bmatrix} \begin{pmatrix} Y_0 \\ Y_1 \\ Y_2 \\ \vdots \\ Y_{N-1} \end{pmatrix}$$

Powell korrigierte die Spalte S zu Y mittels:

$$Y = M^{-1}S$$

Powell (aaO) und Ruyten [W. Ruyten, "Smear correction for frame transfer charge-coupled-device cameras," Optics Letters, vol. 24, pp. 878-880, July 1, 1999 1999] führten unabhängig voneinander den Fall für Charge-Flush und Reverse Clocking ein. Eine Charge-Flush Operation erdet alle Pixel des Bildes vor der Belichtung bzw. setzt alle Bildwerte auf Null. Reverse-Clocking schiebt das Bild während des Einschiebens entgegen der Schieberichtung ein. In beiden Fällen wird die Bilddegradierung wieder mit einer Matrix Vektor-Multiplikation beschrieben:

$$\begin{pmatrix} S_0 \\ S_1 \\ S_2 \\ \vdots \\ S_{N-1} \end{pmatrix} = \begin{bmatrix} 1 & 0 & 0 & \dots & 0 \\ t*\delta & 1 & 0 & \dots & 0 \\ t*\delta & t*\delta & 1 & \dots & 0 \\ \vdots & \vdots & \vdots & \ddots & \vdots \\ t*\delta & t*\delta & t*\delta & \dots & 1 \end{bmatrix} \begin{pmatrix} Y_0 \\ Y_1 \\ Y_2 \\ \vdots \\ Y_{N-1} \end{pmatrix}, \quad t \in [1,2];$$

Der Wert t ist gleich 1 für Charge Flush und gleich 2 für Reverse Clocking.

Iglesias et al. (F.A. Iglesias, A. Feller, and K. Nagaraju, "Smear correction of highly variable, frame-transfer CCD images with application to polarimetry", Applied Optics, vol. 54. no. 19, Jun 2015) betrachten den periodischen Fall von Readout Smear. Dort wird angenommen, dass sich die Szene zwischen Belichtung und Ausschieben ändert, womit Iglesias eine polarimetrische Modulation beschrieb. Dies führt zu einer mathematischen Beschreibung des Smears mit zwei Matrizen:

$$S^k = AY^k + BY^{k+1},$$

$$\begin{pmatrix} S_0^k \\ S_1^k \\ S_2^k \\ \vdots \\ S_{N-1}^k \end{pmatrix} = \begin{bmatrix} 1+\alpha & \delta_1 & \delta_1 & \dots & \delta_1 \\ 0 & 1+\alpha & \delta_1 & \dots & \delta_1 \\ 0 & 0 & 1+\alpha & \dots & \delta_1 \\ \vdots & \vdots & \vdots & \ddots & \vdots \\ 0 & 0 & 0 & \dots & 1+\alpha \end{bmatrix} \begin{pmatrix} Y_0^k \\ Y_1^k \\ Y_2^k \\ \vdots \\ Y_{N-1}^k \end{pmatrix} + \begin{bmatrix} \alpha & 0 & 0 & \dots & 0 \\ \delta_2 & \alpha & 0 & \dots & 0 \\ \delta_2 & \delta_2 & \alpha & \dots & 0 \\ \vdots & \vdots & \vdots & \ddots & \vdots \\ \delta_2 & \delta_2 & \delta_2 & \dots & \alpha \end{bmatrix} \begin{pmatrix} Y_0^{k+1} \\ Y_1^{k+1} \\ Y_2^{k+1} \\ \vdots \\ Y_{N-1}^{k+1} \end{pmatrix}$$

Eine Spalte S mit Smear hängt nun von der aktuellen Spalte mit gleichem Zeitindex k ab, sowie von der folgenden Spalte mit Nachfolgeindex k+1. Iglesias nahm für den periodischen Fall an, dass ein Bild periodisch mit einer Periodizität K auftritt, sodass der Zusammenhang gilt:

$$S = MY: \quad \begin{pmatrix} S^0 \\ S^1 \\ S^2 \\ \vdots \\ S^{K-1} \end{pmatrix} = \begin{bmatrix} A & B & 0 & \dots & 0 \\ 0 & A & B & \dots & 0 \\ 0 & 0 & A & \dots & 0 \\ \vdots & \vdots & \vdots & \ddots & \vdots \\ B & 0 & 0 & \dots & A \end{bmatrix} \begin{pmatrix} Y^0 \\ Y^1 \\ Y^2 \\ \vdots \\ Y^{K-1} \end{pmatrix}$$

Wieder kann die Matrix M invertiert werden um nach Y zu lösen. M und deren Inverse sind in diesem Fall blockzirkulant und invertierbar.

Iglesias berechnete außerdem die Spalte Y mit Zeitindex k unter der Bedingung, dass sich die Bilder nicht periodisch wiederholen:

$$Y^k = \sum_{j=1}^{K-k-j} H^{K-k-j} A^{-1} S^{K-j} + H^K Y^K; \quad H^K = (-A^{-1}B)^K$$

Iglesias zeigte, dass der letzte Term der Gleichung vernachlässigt werden kann, da das System gedämpft ist.

Die bekannten Verfahren beinhalten jedoch einen hohen Rechenaufwand und führen zu komplexen Implementierungen.

Aufgabe der Erfindung ist daher die Bereitstellung eines Verfahrens und einer Vorrichtung, welche eine schnellere und einfachere Korrektur des Readout-Smears ermöglicht.

Diese Aufgabe der Erfindung wird gelöst durch ein Verfahren und eine Vorrichtung gemäß den unabhängigen Patentansprüchen. Vorteilhafte Ausführungsformen sind in den Unteransprüchen definiert.

In einem ersten Aspekt umfasst die Erfindung ein Verfahren zur Korrektur von Smear-Artefakten, umfassend die Schritte Auslesen von erzeugten Ladungen aus einer Matrix von photosensitiven Elementen (CCD); Umwandeln der ausgelesenen Ladungen in Bildwerte; Bestimmen von Korrekturwerten zur Korrektur von Smear-Artefakten; Transformieren der Bild- und der Korrekturwerte mit einer geeigneten Transformation; und Korrigieren der transformierten Bildwerte, basierend auf den transformierten Korrekturwerten. Die photosensitiven Elemente (CCD) können in einer Framestore- oder einer Full-Frame-Architektur implementiert sein. Die transformierten Korrekturwerte können mit den transformierten Bildwerten elementweise verrechnet werden. Die transformierten Korrekturwerte können mit den transformierten Bildwerten multipliziert werden. Alternativ können die transformierten Bildwerte durch die transformierten Korrekturwerte dividiert werden. Zumindest ein Korrekturwert kann zur Korrektur mehrerer Bildwerte in einem Bild verwendet wird. Die Korrekturwerte können eine Toeplitz-Matrix bilden, insbesondere können die Korrekturwerte eine zirkulante bzw. zyklische Matrix bilden. Alternativ können die Korrekturwerte eine Hankel-Matrix bilden. Für die Transformation kann ein Faltungs-Multiplikationstheorem gelten. Die Transformation kann eine Fouriertransformation sein, insbesondere eine schnelle Fouriertransformation. Alternativ kann die Transformation eine z-Transformation oder eine Sinus-Cosinus-Transformation sein. Die Korrektur von variablen Szenen durch die Annahme periodisch auftretender Szenen approximiert werden. Die Korrekturen können unvollständig bis zu einer gewissen Korrekturtiefe ausgeführt werden. Die Korrektur der Smear-Artefakte kann in Echtzeit erfolgen. Drehungen des Bildes können auf einem Speicher durchgeführt werden. Mehrere Bildwerte können in einer Transformation transformiert werden. Ganzzahlige Bildwerte können in Fixed-Point oder Floating-Point, oder gemischte Datenformate konvertiert werden. Zusätzlich kann eine Korrektur für ein Darkfield-Bild und ein Flatfield-Bild erfolgen. Der Sensor kann in mehrere einzelne Sphären gegliedert sein. Gleiche Pixel mehrerer Bilder können benachbart in einem Speicher stehen, damit parallelisiert darauf zugegriffen werden kann. Bildwerte können im Speicher abgelegt werden. Die abgelegten Bildwerte können zur Einsparung von Rechenkapazität zuvor transformiert wurden. Es können mehrere transformierte Korrekturwerte gespeichert und aus dem Speicher abgerufen werden. Plattformspezifische Befehle, zum Beispiel für Vektorberechnungen oder Single-Instruction-Multiple-Data können zur Korrektur verwendet werden. Die Parallelisierbarkeit kann ausgenutzt werden, welche bei einer Zerteilung einer Toeplitz Matrix in mehrere Toeplitzmatrizen entsteht.

In einem zweiten Aspekt umfasst die Erfindung ein Computerprogramm-Produkt, umfassend maschinenlesbare Programmanweisungen, die, ausgeführt auf einem Computer, ein Verfahren gemäß der Erfindung durchführen, z.B. In Form einer ladbaren App für Mobilgeräte.

Nach einem dritten Aspekt umfasst die Erfindung ferner eine Vorrichtung zur Korrektur von Smear-Artefakten, umfassend eine Schnittstelle zum Erhalten von Bildwerten; eine Schnittstelle zum Erhalt von Korrekturwerten zur Korrektur von Smear-Artefakten; einen Schaltkreis zum Transformieren der Bild- und der Korrekturwerte mit einer geeigneten Transformation; und einen Schaltkreis zum Anwenden der transformierten Korrekturwerte auf die transformierten Bildwerte, wobei die Vorrichtung dazu eingerichtet ist, ein Verfahren gemäß der Erfindung durchzuführen, wobei die Korrekturwerte in einem Speicher abgelegt sein können.

Weitere Aspekte und Vorteile der Erfindung werden in der folgenden Beschreibung von Ausführungsbeispielen der Erfindung ersichtlich, unter Bezugnahme auf die einzelnen Figuren der anliegenden Zeichnung.

Fig. 1      zeigt dabei ein Verfahren zur Korrektur von Readout-Smear gemäß einer ersten Ausführungsform der Erfindung.

Fig. 2      zeigt den schematischen Aufbau eines Full-Frame CCDs.

Fig. 3      zeigt den schematischen Aufbau eines Frame-Transfer-CCDs.

Fig. 4      zeigt eine Struktur des Sensors und dessen Prozess der Bildgenerierung in der Kamera Fast Solar Polarimeter gemäß einer Ausführungsform der Erfindung.

Fig. 5      zeigt Messergebnisse zum Vergleich eines Gleitkomma-Datenformates mit mehreren Fixpunkt-Datenformaten unterschiedlicher Bitbreite.

Fig. 6      zeigt Messergebnisse für die aperiodische Korrektur von Bildern, welche periodisch mit einer Periodizität von vier verschmiert wurden.

Fig. 7      zeigt den mittleren Signalwert von Differenzbildern zwischen aperiodisch korrigierten und originalen, nicht degradierten Bildern.

Fig. 8      zeigt ein Blockschaltbild einer Implementierung eines Verfahrens gemäß einer Ausführungsform der Erfindung auf einem FPGA 0810.

Fig. 9      zeigt die Blöcke des Ethernet Subsystems gemäß einer Ausführungsform der Erfindung.

Fig. 10      zeigt die Parallelisierungen in der Architektur gemäß einer Ausführungsform der Erfindung.

Fig. 11 zeigt ein funktionales Speicherdiagram des externen QDR II+ RAMs mit Funktionen der Speicherschnittstelle gemäß einer Ausführungsform der Erfindung.

Fig. 12 visualisiert die Architektur, welche zwei Halbspalten mittels einer Schaltung gemäß einer Ausführungsform der Erfindung Fourier-transformiert.

Fig. 13 zeigt den detaillierten Aufbau eines Berechnungskanals gemäß einer Ausführungsform der Erfindung.

Fig. 14 zeigt die Takt-Domänen der gesamten Schaltung gemäß einer Ausführungsform der Erfindung.

Fig. 15 ist ein Differenzbild zwischen einem Originalbild und einem degradierten Bild mit Smear vor einer Korrektur und hat einen maximalen Fehler von 3783 uint16 Einheiten.

Fig. 16 zeigt das gleiche Differenzbild wie Fig. 15, aber nach der Korrektur durch die Schaltung.

Fig. 17 zeigt die gleiche Korrektur wie Fig. 16, allerdings wurde dieses Bild mit einer Simulationssoftware berechnet.

Fig. 18 wurde so erzeugt wie das das Bild in Fig. 17, allerdings mit einer Korrekturtiefe von 6 statt 4.

Fig. 19 zeigt ein Testbild aus der SIPI-Database.

Fig. 20 zeigt ein Testbild aus der SIPI-Database.

Fig. 21 zeigt den Smear des Bildes der Fig. 19 nach Degradierung im aperiodischen Fall mit realistischen Parametern.

Fig. 22 zeigt das Bild aus Fig. 21 nach einer Korrektur mit einer Korrekturtiefe von 1.

Fig. 23 zeigt das Bild aus Fig. 19 nach einer Korrektur mit einer Korrekturtiefe von 2, wodurch das nächste Bild der Reihe erkennbar wird.

Fig. 24 zeigt das Bild aus Fig. 19 nach einer Korrektur mit einer Korrekturtiefe von 4.

Fig. 25 zeigt Simulationsergebnisse für die Annäherung des periodischen Falls an den aperiodischen Fall.

Fig. 26 zeigt nun die periodisch approximierte Korrektur einer aperiodisch verschmierten Bildfolge.

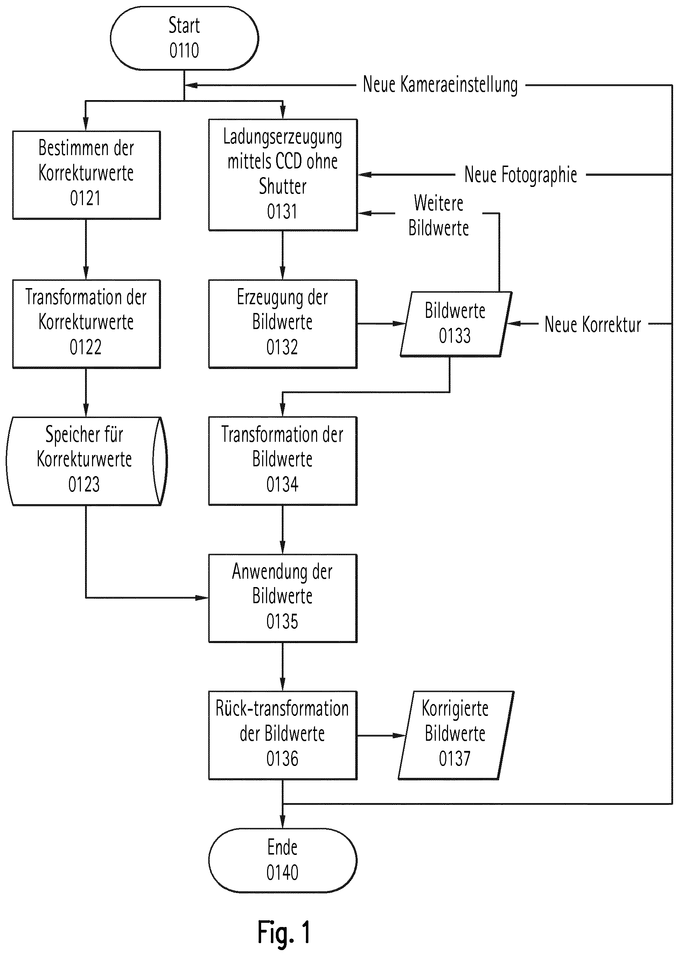

Figur 1 zeigt ein Verfahren zur Korrektur von Readout-Smear gemäß einer ersten Ausführungsform der Erfindung. Auf Grundlage einer Kameraeinstellung, welche beispielsweise Belichtungszeiten, Transferzeiten, oder Zeiten des Szenenwechsels spezifiziert, werden Korrekturwerte bestimmt 0121. Diese Korrekturwerte werden in einen Frequenzbereich transformiert 0122 und liegen als Daten vor 0123. Sie behalten ihre Gültigkeit für eine Einstellung der Kamera. Mit einem CCD ohne Shutter werden Ladungen erzeugt 0131, welche weiter in Bilderwerte umgewandelt werden 0132. Solche Erzeugung von Bildwerten kann insbesondere auch die Erweiterung von Bildwerten oder die Partitionierung von Bildwerten umfassen. Diese Bildwerte liegen ebenfalls als Daten vor 0133 und werden transformiert 0134. Eine Anwendung der Korrektur 0135 erfolgt durch Verarbeitung transformierter Bildwerte und transformierter Korrekturwerte.

Gemäß der Erfindung wird hierbei ausgenutzt, dass die Inverse der zirkulanten Matrix M wiederum zirkulant ist. Die Matrix-Vektor-Multiplikation entspricht somit einer Faltung:

$$Y = M^{-1}S = M^{-1}[1,:] * S = \mathscr{F}^{-1}(\mathscr{F}(M^{-1}[1,:]) \circ \mathscr{F}(S))$$

Die Matrix $M^{-1}$ entspricht dabei den Korrekturwerten, die Matrix S den unkorrigierten Bildwerte (mit Smear) und die Matrix Y den korrigierten Bildwerten. F bezeichnet die Fouriertransformation.

Die Matrix M wird invertiert. Anstatt die Inverse mit dem Vektor S zu multiplizieren wurde die erste Zeile der inversen Matrix mit dem Vektor S gefaltet. Die Reduzierung der Komplexität beruht darauf, dass eine Fourier-Transformation in Länge einer ganzzahligen Potenz von 2 verwendet wird, um dadurch die Faltung als elementweise Multiplikation im Frequenzbereich zu berechnen. Ein Signal, dessen Länge keine Potenz von 2 ist, kann durch Erweiterungen mit Nullen auf eine entsprechende Länge gebracht werden (Zero-Padding). Die Matrix wird dabei so erweitert, dass diese zirkulant bleibt.

Der Vektor Y wurde weiter durch Division berechnet. So kann die erste Zeile von M in den Frequenzbereich transformiert werden und anschließend als Divisor elementweise mit der Transformierten von S als Dividend verrechnet werden, solange der Divisor keine Null-Elemente aufweist.

Alle Algorithmen des Stands der Technik beziehen sich auf eine Spalte des Signals. Das Signal eines CCDs besteht üblicherweise aber aus mehreren Spalten. Daher kann das zweidimensionale Signal eines CCD auch zweidimensional transformiert werden um die Smear-Korrektur im zweidimensionalen Frequenzraum vorzunehmen. Ebenso eignen sich dreidimensionale Frequenzräume um Serien von Bildern zu korrigieren. Die erste Zeile der Inversen von M wird dabei mit Nullen auf die Dimension des zu korrigierendes Signals erweitert und in den mehrdimensionalen Frequenzraum transformiert. Die Korrektur erfolgt wiederum durch elementweise Multiplikation mit dem Signal.

Eine anschließende Rücktransformation 0136 generiert korrigierte Bildwerte 0137 als Daten. Das Verfahren kann mit neuer Kameraeinstellung neu gestartet werden. Es können auch weitere Bildwerte mit der gleichen Kameraeinstellung in einer neuen Korrektur prozessiert werden. Weiter können mehrere Bildwerte für eine Korrektur erzeugt werden 0133, 0131, 0132.

In einer weiteren Ausführungsform der Erfindung wird ein Verfahren vorgeschlagen, welches den Readout-Smear für den Fall von Charge-Flush und Reverse Clocking Operationen im Frequenzbereich berechnet.

Ausgangspunkt ist hierbei die Erkenntnis, dass die Matrix M in diesen Fällen eine Toeplitz Matrix in unterer Dreiecks-Form bildet.

Um die Korrektur erfindungsgemäß als Faltung realisieren zu können, wird die Matrix M von einer derartigen Toeplitz-Matrix auf eine zirkulante Matrix erweitert:

$$
\begin{pmatrix} Y \\ Z \end{pmatrix} = M_{ext}^{-1} \begin{pmatrix} S \\ 0 \end{pmatrix}; \quad M_{ext}^{-1} = \begin{bmatrix} \begin{array}{cccc|cccc} 1 & 0 & \dots & 0 & t*\delta & t*\delta & \dots & t*\delta \\ t*\delta & 1 & \dots & 0 & 0 & t*\delta & \dots & t*\delta \\ \vdots & \vdots & \ddots & \vdots & \vdots & \vdots & \ddots & \vdots \\ t*\delta & t*\delta & \dots & 1 & 0 & 0 & \dots & t*\delta \\ \hline t*\delta & t*\delta & \dots & t*\delta & 1 & 0 & \dots & 0 \\ 0 & t*\delta & \dots & t*\delta & t*\delta & 1 & \dots & 0 \\ \vdots & \vdots & \ddots & \vdots & \vdots & \vdots & \ddots & \vdots \\ 0 & 0 & 0 & 0 & t*\delta & t*\delta & \dots & 1 \end{array} \end{bmatrix}^{-1}
$$

Die Matrix Z beinhaltet dabei nicht benutzte Information; Erweiterungen, d.h. Bildwerte oder Korrekturwerte, die nicht benötigt werden, aber vorliegen. Der Parameter $\delta$ bezeichnet das Verhältnis von Transferzeit zu Belichtungszeit, der Parameter $\alpha$ bezeichnet das Verhältnis der Zeit, die beim Wechsel der Szene benötigt wird, zur Belichtungszeit, der Parameter t ist ein Index (1 oder 2), wobei t =1 für Charge Flush und t =2 für Reverse Clocking steht.

Die Inverse der erweiterten Matrix ist wiederum zirkulant, so dass ihre erste Zeile wiederum eine Transferfunktion darstellt. Hierfür muss die Matrix M aus mindestens die doppelte ihrer ursprünglichen Größe minus 1 erweitert werde. Jedoch kann die Matrix M auch auf größere Größen erweitert werden. Insbesondere wurde die Matrix M auf eine Größe erweitert welche eine ganzzahlige Potenz von zwei ist, so dass die Transformation zur Smear-Korrektur schnell berechnet werden kann. Der Vektor S wird auf die gleiche Größe wie die Zeilenlänge von M erweitert, indem Nullen aufgefüllt werden. Die Transformierten von S und der Inversen von M können dann im Frequenzbereich elementweise multipliziert werden. Eine Rücktransformation dieses Produktes beinhaltet dann das korrigierte Signal an der oberen Position. Die unteren Werte des Rücktransformierten Vektors werden verworfen. Die Anzahl der verworfenen Werte ist die Anzahl der Werte, mit der die Vektoren anfangs erweitert wurden. Verworfene Werte wurden durch Z gekennzeichnet.

Gemäß einer weiteren Ausführungsform der Erfindung kann auch der periodische Fall nach Iglesias im Frequenzbereich berechnet werden. Ausgehend von der Erkenntnis, dass die blockzirkulante Matrix M zirkulant wird, wenn beide delta-Werte gleich sind und die Inverse dieser Matrix dann ebenfalls zirkulant wird, kann gemäß der Erfindung abermals die Korrektur mittels Faltung und damit sehr effizient erfolgen. Diese Voraussetzung ist im normalen Betrieb des CCD-Sensors gegeben. Die erste Zeile der Inversen kann mit dem Smear-degradierten Signal gefaltet werden um das Signal ohne Smear zu berechnen. Eine elementweise Multiplikation im Frequenzbereich macht diese Art der Berechnung schneller als eine Matrix-Vektor-Multiplikation.

Gemäß einer weiteren Ausführungsform der Erfindung kann auch der aperiodische Fall nach Iglesias effizienter berechnet werden. Dabei wird der aperiodische Fall erfindungsgemäß nur bis zu einer gewissen Korrekturtiefe n hin berechnet und vereinfachte sich zu:

$$Y^k \approx \sum_{j=0}^{n} H^j A^{-1} S^{k+j}$$

Zur erfindungsgemäßen Approximation der Lösung des aperiodischen Falls wird erfindungsgemäß der periodische Fall herangezogen:

$$S = MY : \begin{pmatrix} S^k \\ S^{k+1} \\ S^{k+2} \\ \vdots \\ S^{k+n} \end{pmatrix} = \begin{bmatrix} A & B & 0 & \dots & 0 \\ 0 & A & B & \dots & 0 \\ 0 & 0 & A & \dots & 0 \\ \vdots & \vdots & \vdots & \ddots & \vdots \\ B & 0 & \dots & 0 & A \end{bmatrix} \begin{pmatrix} Y^k \\ Y^{k+1} \\ Y^{k+2} \\ \vdots \\ Y^{k+n} \end{pmatrix}$$

k = Index (Zeiteinheit der Spalte)
K = Periodizität im periodischen Fall
A, B = Matrizen nach Iglesias (Blöcke von M)

Der periodische Fall impliziert hierbei einen Fehler an dem Signalwert Y^(k+n), was die Matrix M andererseits zirkulant macht, wenn delta_1 = delta_2 gilt. Durch die zirkulante Matrix M kann der aperiodische Fall im Frequenzbereich dargestellt werden:

$$\begin{pmatrix} Y^k \\ Z \\ Z \\ \vdots \\ Z \end{pmatrix} = \mathscr{F}^{-1}(\mathscr{F}(M^{-1}[1,:]) \circ \mathscr{F}(\begin{pmatrix} S^k \\ S^{k+1} \\ \vdots \\ S^{k+n-1} \\ 0 \end{pmatrix}))$$

Der mit dem Fehler verrechnete Vektor S^(k+n) wird null gesetzt. Somit werden n Spalten S^(i) zur Korrektur einer Spalte Y^k herangezogen. Andere Spalten Y^(k+i) werden nach der Berechnung verworfen und sind mit Z markiert. Als Ergebnis konvergiert der Y^k mit steigendem n schnell gegen seinen wahren Wert.

Die Anzahl der zur Korrektur eingesetzten Spalten n wird Korrekturtiefe genannt.

Die Erweiterung einer Toeplitz-Matrix zu einer zirkulanten Matrix lässt sich zur Parallelisierbarkeit der Verfahren nutzen. Es können quadratische Blöcke aus den Toeplitzmatrizen oder aus den zirkulanten Matrizen ausgeschnitten werden. Diese Blöcke sind dann immer Toeplitzmatrizen. Diese Toeplitzmatrizen können zu zirkulanten

Matrizen erweitert werden. Dadurch lässt sich die Berechnung in allen gezeigten Fällen parallelisieren. Beispielsweise im aperiodischen Fall:

$$\begin{pmatrix} Y^k \\ Z \\ \vdots \\ Z \\ Z \end{pmatrix} = \begin{bmatrix} T^k & T^{k+1} & \dots & T^{k+n} & Z \\ Z & Z & \dots & Z & Z \\ \vdots & \vdots & \ddots & \vdots & \vdots \\ Z & Z & \dots & Z & Z \\ Z & Z & \dots & Z & Z \end{bmatrix} \begin{pmatrix} S^k \\ S^{k+1} \\ \vdots \\ S^{k+n-1} \\ 0 \end{pmatrix}$$

Hier entstehen die relevanten Blöcke T^i zur Berechnung von Y^k. Die Formel lässt sich also schreiben als:

$$\begin{pmatrix} Y^k \\ Z \end{pmatrix} \approx \mathscr{F}^{-1}\left( \sum_{j=0}^{n-1} \mathscr{F}(T_{ext}^{k+j}[1,:]) \circ \mathscr{F}(S^{k+j}) \right)$$

Die einzelnen Terme in der Summe können somit parallel berechnet werden. Gleiches ist für den Standard-Fall, den periodischen Fall sowie Charge-Flush und Reverse Clocking möglich. Die Parallelisierbarkeit kann in Software und in Hardware erfolgen und ermöglicht einen geringeren Energieverbrauch der Berechnung oder einen höheren Hardwareeinsatz.

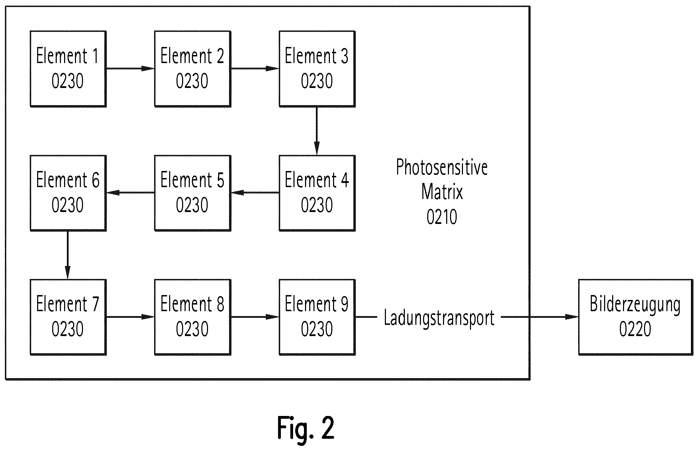

Figur 2 zeigt den schematischen Aufbau eines Full-Frame CCDs. Die photosensitive Matrix 0210 dient der Ladungserzeugung in den Elementen 0230 und ist durch den gerichteten Ladungstransport an mindestens eine Vorrichtung zur Bilderzeugung 0220 verbunden. Alle Elemente der photosensitiven Matrix sind ebenfalls an mindestens einen solchen Ladungstransport angebunden. Die Ladungen werden vor und nach der Belichtung in Transportrichtung bewegt, wodurch in anderen Elementen der Matrix die Ladung additiv vergrößert wird wenn kein Shutter verwendet wird. Da jede bewegte Ladung in anderen Elementen belichtet wird, entsteht durch die Full-Frame-Architektur ein Readout-Smear.

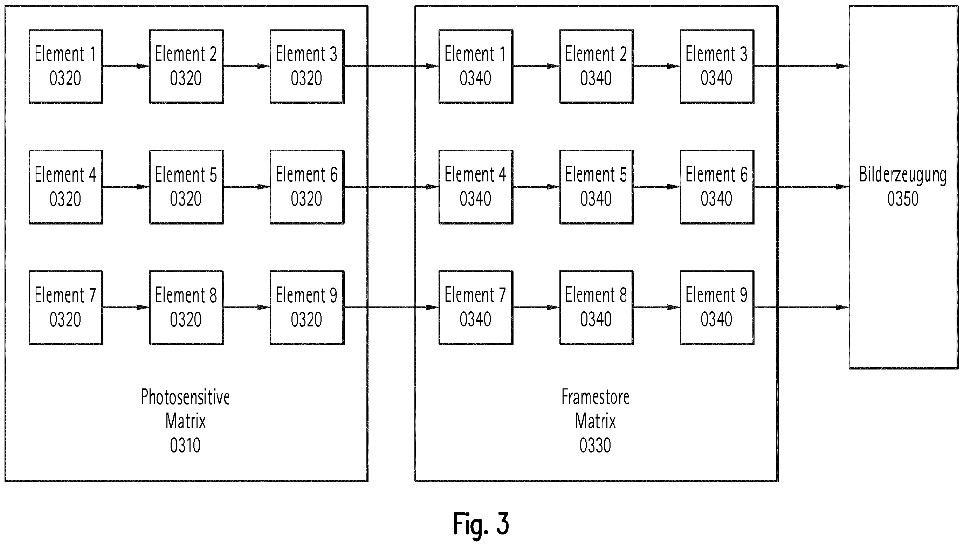

Figur 3 zeigt den schematischen Aufbau eines Frame-Transfer-CCDs. Die photosensitive Matrix 0310 dient zur Ladungserzeugung und ist über eine Framestore Matrix 0330 an eine Vorrichtung zur Bilderzeugung 0350 verbunden. Elemente 0320 der photosensitiven Matrix sind untereinander zum Ladungstransport verbunden. Der Ladungstransport geschieht über die Elemente 0340 der Framestore Matrix in Richtung Bilderzeugung. Während den Transporten vor und nach der Belichtung werden Ladungen in den Elementen der photosensitiven Matrix weiter belichtet. Ohne einen Shutter entsteht durch diese Belichtung während dem Transport Readout Smear.

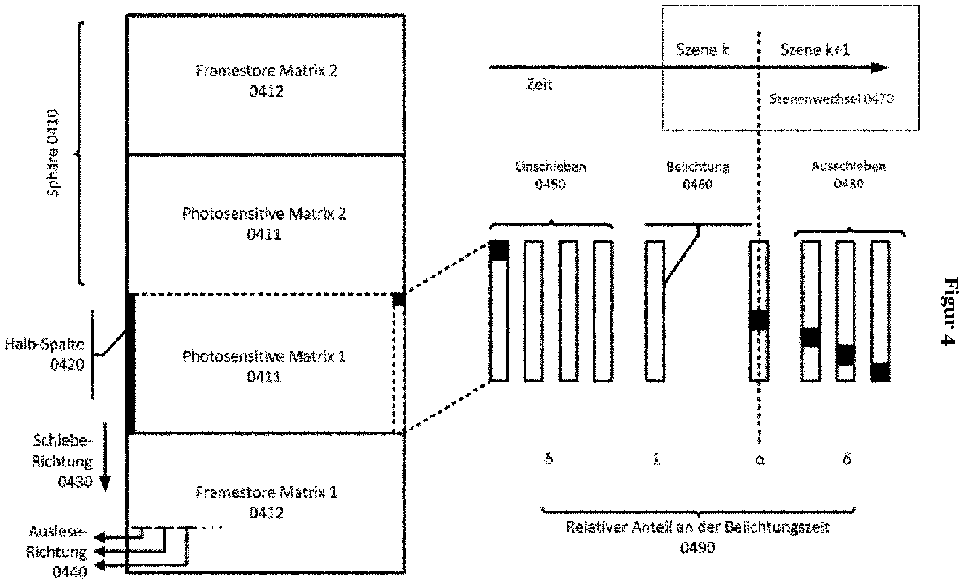

Figur 4 zeigt die Struktur und den Prozess der Bildgenerierung in der Kamera Fast Solar Polarimeter. Der Sensor ist in zwei Sphären unterteilt 0410. Beide Sphären bestehen aus einer photosensitiven Matrix 0411 und einer framestore Matrix 0412. Jede Halbspalte 0420 einer photosensitiven Matrix wird nach der Belichtung in Schieberichtung 0430 in die Framestore Matrix der gleichen Sphäre geschoben. Bei diesem Vorgang findet der Prozess der Bilddegradierung durch Smear statt. Das Auslesen der Ladungen geschieht in Ausleserichtung 0440. Da die Ausleserichtung ungleich der Schieberichtung ist entsteht die Notwendigkeit das Bild während der Smear-Korrektur zu drehen. Der Prozess der Bildentstehung gliedert sich in die vier Phasen Einschieben 0450, Belichtung 0460, Szenenwechsel 0470 und Ausschieben 0480. Die wahren Bildwerte werden durch die Belichtung an der korrekten Position des Pixels gewonnen. Jede andere Phase führt zu einer additiven Ladung in jedem Pixel, den diese Ladung passiert und verursacht damit Smear. Diese additiven Ladungen sind proportional zu der Zeit, in der sich die verschobene Ladung in dem Pixel aufhält. Die Angabe dieser Phasen-bezogenen Zeiten erfolgt durch ihren relativen Anteil an der Belichtungszeit 0490. Die Entstehung des Bildes mit Smear hängt darüber hinaus von der Szene ab. Das Bild mit Smear wird also immer in Abhängigkeit des relativen Anteils an der Belichtungszeit und dem Strahlungseinfall bedingt durch die Szene angegeben.

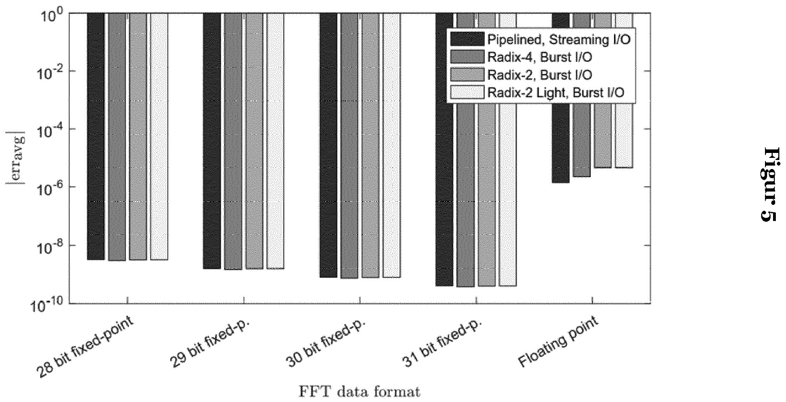

Figur 5 zeigt Messergebnisse zum Vergleich eines Gleitkomma-Datenformates mit mehreren Fixpunkt-Datenformaten unterschiedlicher Bitbreite. Untersucht wurde die Genauigkeit mehrerer Hardware-Implementierungen von Fourier-Transformationen, bei verschiedenen Implementierungstypen, Datenformaten und Bitbreiten. Es wurden keine signifikanten Unterschiede bei verschiedenen Implementierungstypen gefunden, jedoch sind Fourier-Transformationen der Kameradaten genauer in Fixpunkt-Darstellung zu berechnen als in Gleitkomma-Darstellung. Weiter skaliert die Genauigkeit der Fixpunkt-Darstellung mit der Bitbreite des Fixpunkt-Datenformats.

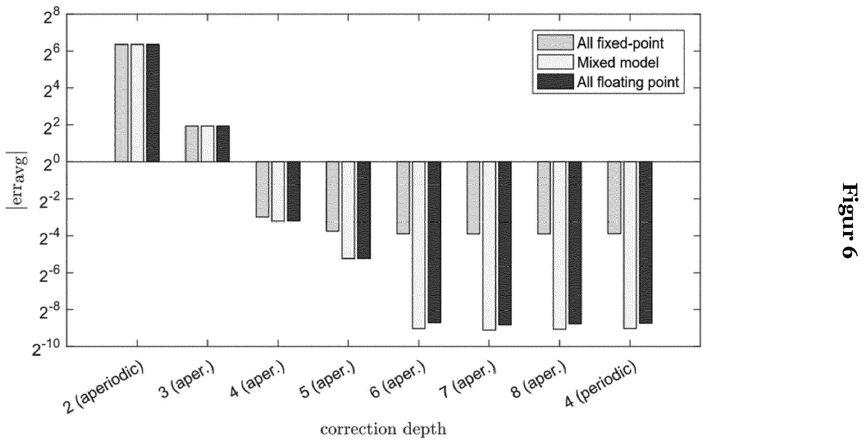

Figur 6 zeigt Messergebnisse für die aperiodische Korrektur von Bildern, welche periodisch mit einer Periodizität von vier verschmiert wurden. Die Tiefe der Korrektur ist dabei variabel. Gemessen wurde der mittlere Fehler im Differenzbild vom korrigierten Bild zum Originalbild. Es wurde erkannt, dass eine Korrekturtiefe zwischen vier und sechs Bildern ausreichend ist um eine hinreichende Genauigkeit der Korrektur zu erhalten. Gleichzeit wird ein minimierter Rechenaufwand sichergestellt, indem die Korrekturtiefe begrenzt wird. Geringere Korrekturtiefen haben höhere Fehler, höhere Korrekturtiefen erreichen nur geringfügig höhere Genauigkeiten.

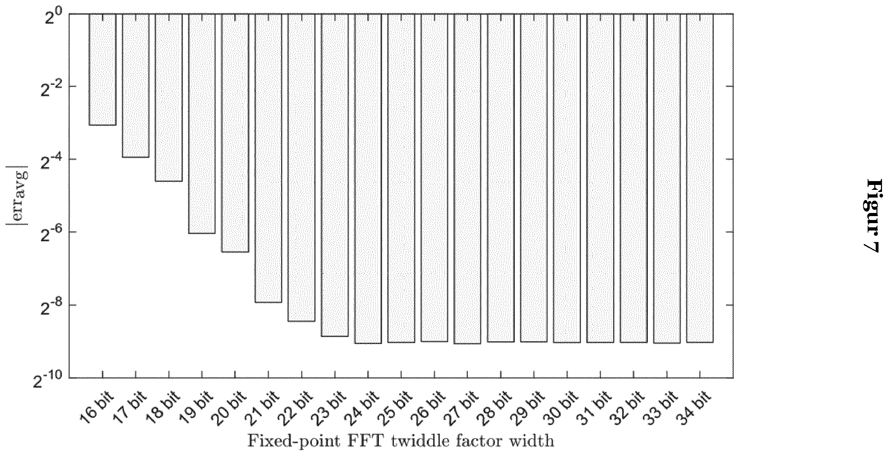

Figur 7 zeigt den mittleren Signalwert von Differenzbildern zwischen aperiodisch korrigierten und originalen, nicht degradierten Bildern. Die aperiodische Korrektur wurde mit variabler Breite von Phasenwerten in der Transformation vorgenommen. Es wurde abgeleitet, dass die Transformation mit Bitbreite 31 eine Breite der Phasenwerte von 24 Bit aufweisen sollte.

Neben verschiedenen Verfahren umfasst die Erfindung Hardware-Implementierungen zur Smear-Korrektur. Die Hardware-Implementierung wurde für eine wissenschaftliche Kamera entwickelt, welch auf einem framestore-CCD basiert. Bei 400 Bildern pro Sekunde ist ein mechanischer Shutter nicht realisierbar. Es wurde zur Echtzeit-Smear-Korrektur der aperiodische Fall in Hardware implementiert. Der Kamera-Sensor besteht aus zwei Sphären mit eigenem framestore-Bereich. Die Bilder jeder Sphäre wird unabhängig korrigiert. Die Bilder werden zunächst auf einem Random-Access-Memory gedreht und mit einer Korrekturtiefe von 4 oder 6 Bildern gespeichert. Das Speichern erfolgt mit einem Memory-Mapping, in dem gleiche Pixel aus Bildern mit unterschiedlichem Zeitindex benachbart im Speicherband stehen. Auf diese Weise wird der durchsatzstärkere Lesezugriff optimiert anstatt des Schreibzugriffs. Es wurde festgestellt, dass der Speicher die kritische Ressource ist, daher wurden die Bilder der Korrekturtiefe im Intensitätsbereich gespeichert was weniger Speicher und mehr Fourier-Transformationen benötigt. Allerdings können die Bilder auch erst transformiert und dann gespeichert werden, was mehr Speicher und weniger Rechenleistung erfordert. Die Datenformate einer Transformations-basierten Lösung wurden verglichen. Es wurden in Hardware wie auch in Software besonders Fixed-Point und Floating-Point basierte Verfahren evaluiert. Die Fixed-Point basierten Verfahren sind insgesamt günstiger aber weniger flexibel. Daher wurde gemischte Verfahren implementiert, welche Fixed-Point basierte Transformationen verwenden, die eigentliche Korrektur zwischen den Transformationen aber mit Floating-Point berechnen. Diese gemischten Verfahren reduzierten de Hardware-Bedarf bei gleichzeitiger Maximierung der Genauigkeit. Die Integer-Werte des ursprünglichen Bildes wurden dabei immer so gecasted, dass die resultierenden Fixed- und Floating-Point Datenformate ein Überlaufen des Zahlenraumes verhindern und die Genauigkeit der Berechnung gleichzeitig maximiert wird. Hardwarebasierte Fourier-Transformationen haben im Regelfall einen komplexen Eingang. Daher wurden die Transformationen so implementiert, dass zwei Signale in einem Hardware-Modul für Fourier-Transformationen gleichzeitig berechnet werden, wobei ein Signal an den reellen Eingang des Moduls, und das andere Signal gleichzeitig an den imaginären Eingang des Moduls gelegt wird. Das resultierende Ausgangssignal wurde dann in zwei Transformationen der jeweiligen Eingangssignale zerlegt. Die Korrekturtiefe wurde anschließend gemessen. In einem positiven 16 Bit Datenformat kann eine Korrekturtiefe von 4 als ausreichend für die Kamera betrachtet werden, weil der Fehler durch Smearing danach geringer ist als der Fehler, welcher durch das Ausleserauschen entsteht.

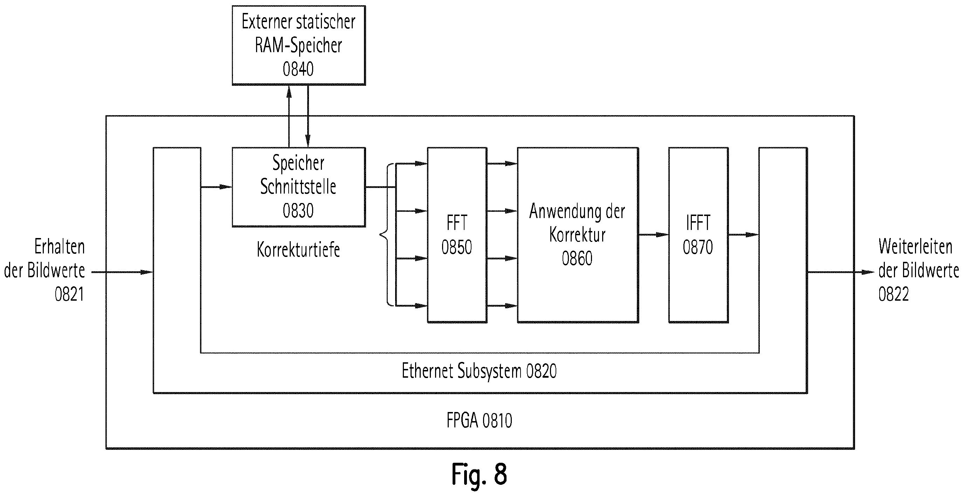

Figur 8 zeigt das Blockschaltbild einer Implementierung auf einem FPGA 0810. Das Subsystem für die Ethernet-Kommunikation 0820 implementiert teilweise das Erhalten der Bildwerte 0821, aber auch ein Weiterleiten der korrigierten Bildwerte 0822. Die Bildwerte mit Smear werden über eine Speicherschnittstelle 0830 auf einen externen statischen RAM-Speicher 0840 geschrieben. Während dem Schreiben wird das Bild gedreht. Während dem Lesen werden Bildwerte auf die Breite der Korrekturtiefe parallelisiert. Diese parallelen Werte werden mittels schneller Fouriertransformationen 0850 in den Frequenzbereich transformiert. Anschließend findet die Anwendung der Korrektur 0860 statt. Zuletzt werden die korrigierten Bildwerte mit einer Inversen Fouriertransformation 0870 zurück in den Intensitätsbereich transformiert. Diese rücktransformierten Bildwerte werden wieder an das Ethernet-Subsystem übergeben um diese weiter zu leiten.

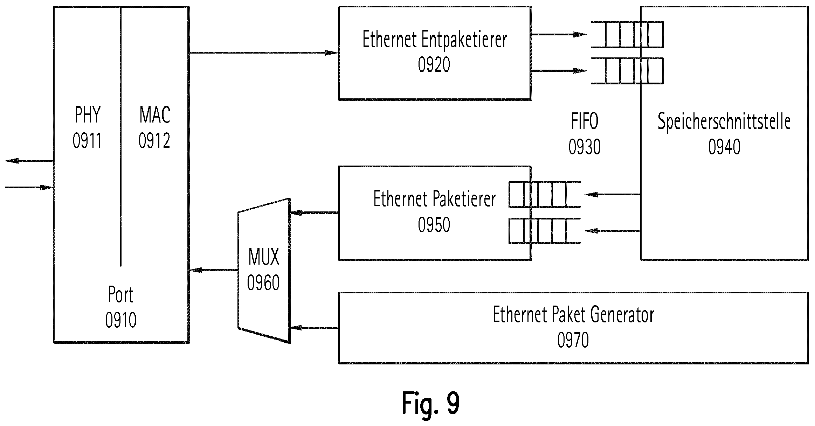

Figur 9 zeigt die Blöcke des Ethernet Subsystems. Ein Port 0910 besteht aus der physikalischen Schicht PHY 0911 und der Medium Access Control MAC 0912 und implementiert die Kommunikation über ein 10 Gigabit Ethernet Kabel. Ein Ethernet Entpaketierer 0920 entfernt die Paketüberhänge von den Nettodaten und schreibt diese in je einen FIFO-Puffer 0930 pro Sphäre. Die FIFO-Puffer leiten die Nettodaten an die Speicherschnittstelle 0940 weiter. FIFO-Puffer verbinden auch den Ethernet-Paketierer 0950 an die Speicherschnittstelle, welcher korrigierte Bildwerte zum Versenden in Ethernet Pakete paketiert. Hier übernimmt der FIFO-Puffer eine Funktion um Rückstau zu beherrschen. In beide Richtungen werden Takt-Domänen entkoppelt. Ein Multiplexer 0960 kann einen Ethernet Paket Generator 0970 in den Datenstrom schalten um einen Test-Datenstrom mit höherem Durchsatz zu erzeugen.

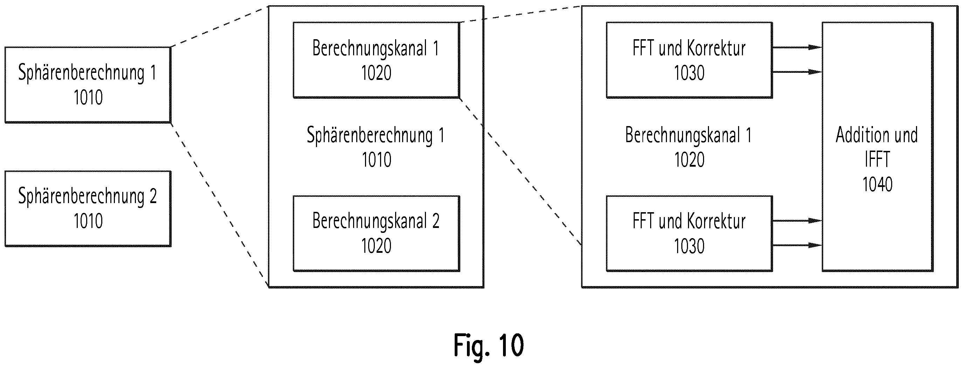

Figur 10 zeigt die Parallelisierungen in der Architektur. Die Korrektur der Bilder je einer Sphäre findet in je einer Sphärenberechnung 1010 statt. Für zwei Sphären gibt es damit zwei Module. Jede Sphärenberechnung unterteilt sich wiederum in zwei Berechnungskanäle 1020. Diese Kanäle sind gleich aufgebaut und arbeiten im zeitlichen Multiplex-Verfahren. Jeder Berechnungskanal beinhaltet wiederum zwei Transformations- und Korrektur-Module 1030. Jedes dieser Module bearbeitet synchron zwei Halbspalten, wodurch eine Korrekturtiefe von 4 erreicht wird. Alle Halbspalten werden danach synchron an das Modul für Addition und Rücktransformation 1040 übergeben, welches die Signale addiert und in den Intensitätsbereich transformiert.

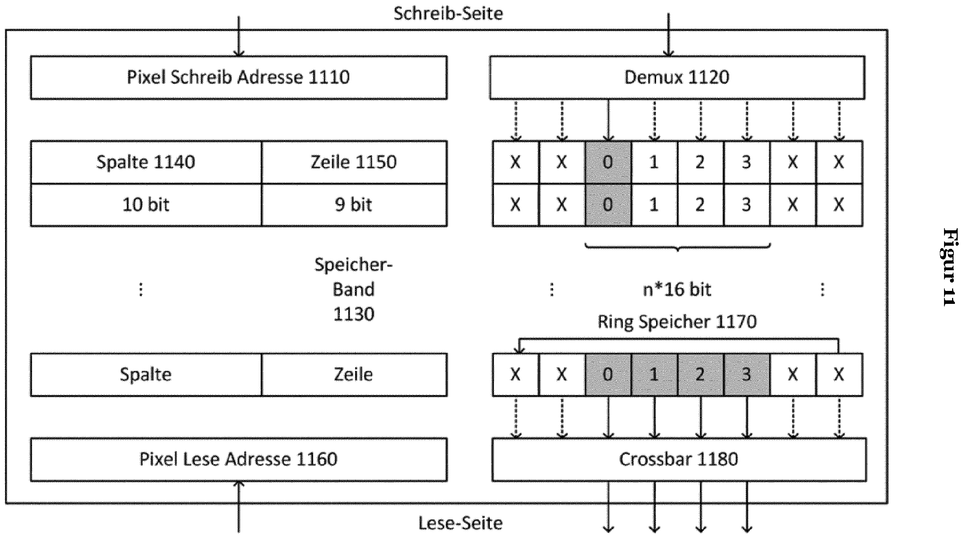

Figur 11 zeigt ein funktionales Speicherdiagram des externen QDR II+ RAMs mit Funktionen der Speicherschnittstelle. Der Speicher wurde in Schreib- und Leseseite unterteilt. Die Schreibseite ist über die Speicherschnittstelle an das Ethernet-Subsystem angebunden. Es wird ein Pixel pro Takt geschrieben. Die Schreibadresse 1110 wird beim Schreibzugriff adressiert und ein Demultiplexer 1120 legt den Bildwert von einem Pixel mit dem richtigen Absatz in ein Speicherwort. Das Wort ist eine Einheit vom Speicherband 1130 und wird mit Spaltenindex 1140 und Zeilenindex 1150 adressiert. Der gleiche Pixel von folgenden Bildern wird an die gleiche Adresse im Speicherband geschrieben, aber mit inkrementiertem Absatz. Wird ein Wort lesend adressiert 1160 funktioniert ein Speicherwort immer als Ringspeicher 1170, da mehrere gleiche Pixel mit unterschiedlichem Zeitindex parallel ausgelesen werden. Dies erfordert zum einen eine Crossbar 1180 auf der Lese-Seite. Zum anderen werden immer die zu prozessierenden Halbspalten ausgelesen, was durch die Adressierung bedingt ist.

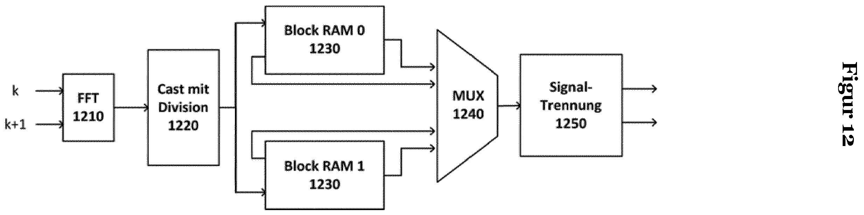

Figur 12 visualisiert die Architektur, welche zwei Halbspalten mittels einer Schaltung Fourier-transformiert. Der komplexe Eingang der eigentlichen vorwärts-Fourier-Transformation 1210 wird für eine zweite Halbspalte verwendet. Beide Halbspalten sind von der gleichen Position mit benachbartem Zeitindex k. Die transformierten, doppelten Halbspalten werden in einen der beiden Block-RAMs 1230 geschrieben, da über die beiden Ausgänge des RAMs vorwärts und gleichzeitig rückwärts ausgelesen werden muss. Der andere Block-RAM schreibt das nächste doppelte Signal, da der Durchsatz durch Schreib- und Lesezugriffe am RAM kurzzeitig verdoppelt wird. Entsprechend wird ein Multiplexer 1240 hinter den RAMs benötigt. Dieser multiplext auf eine mathematische Logik 1250, welche der Trennung beider, transformierter, einzelner Halbspalten dient. Insgesamt spart diese Schaltung Ressourcen im Vergleich zu zwei Transformationen.

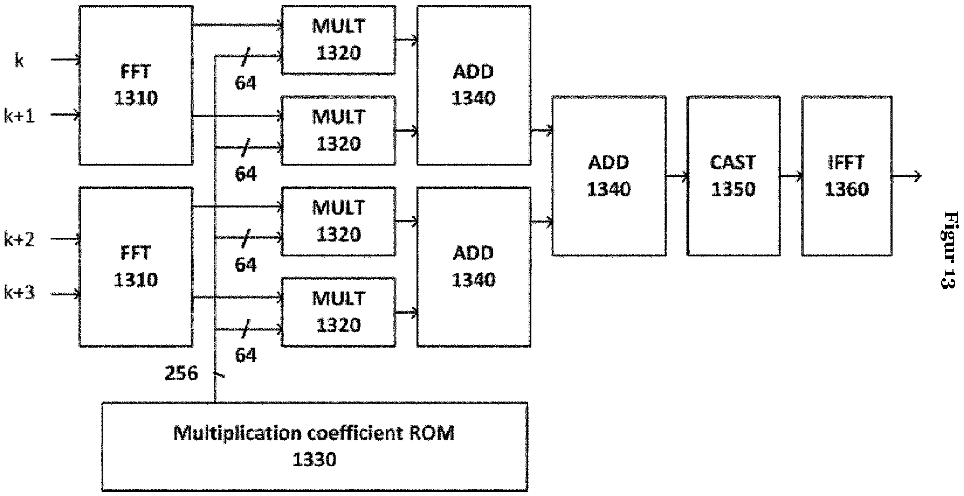

Figur 13 zeigt den detaillierten Aufbau eines Berechnungskanals. Eingangsseitig sind zwei Blöcke 1310 instanziiert, welche je zwei gleiche Halbspalten mit unterschiedlichem Zeitindex transformieren. Diese transformierten Spalten werden mit den vorberechneten, transformierten Korrekturwerten in je einem komplexen Multiplizierer 1320 multipliziert. Die komplexen Korrekturwerte werden dafür in einem ROM 1330 gespeichert. Anschließend werden die Produkte in komplexen Addierern 1340 stufenweise addiert, per Typecast 1350 in Fix-Punkt-Datenformate übertragen und durch eine Schaltung für Fourier-Transformationen 1360 in den Intensitätsbereich zurück transformiert.

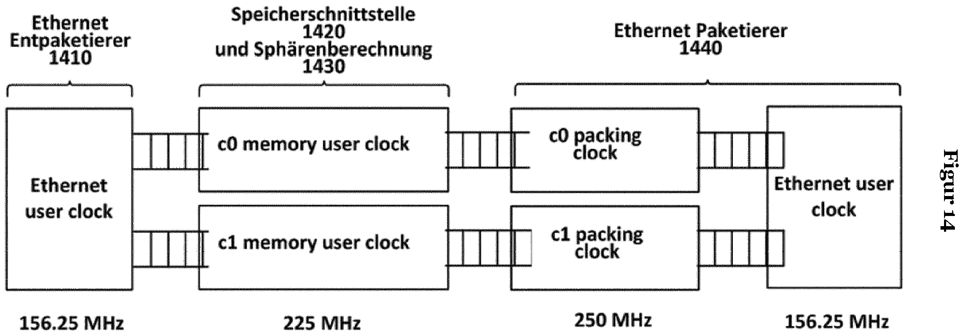

Figur 14 zeigt die Takt-Domänen der gesamten Schaltung. Der Takt des Ethernet Entpaketierers 1410 wird aus dem Ethernet-Subsystem abgeleitet. Die Sphärenberechnung 1430 und die Speicherschnittstelle 1420 werden mit getrennten Takten versorgt. Der Ethernet Paketierer 1440 erfordert teils einen höheren Takt, da Header eingefügt werden müssen. Die Weitergabe der Pakete in den Ethernet-Datenstrom ist wieder synchron zum Takt des Ethernet Subsystems.

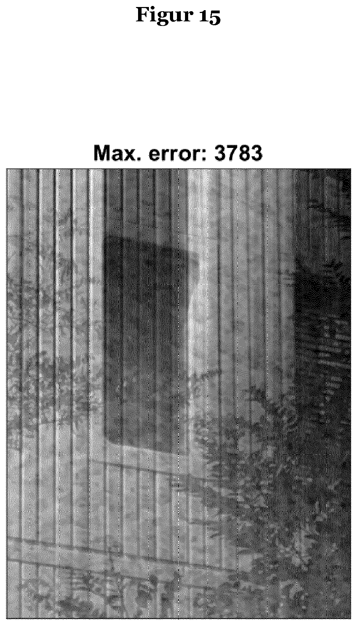

Figur 15 ist ein Differenzbild zwischen einem Originalbild und einem degradierten Bild mit Smear vor einer Korrektur und hat einen maximalen Fehler von 3783 uint16 Einheiten.

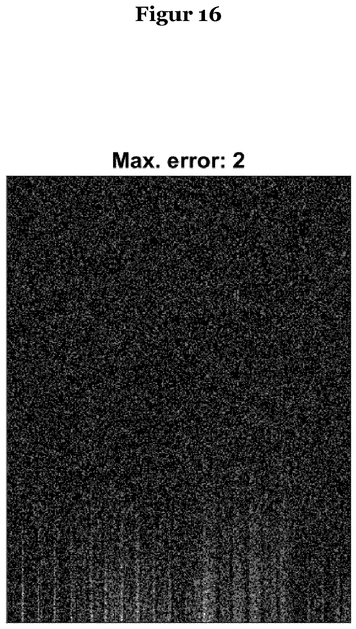

Figur 16 zeigt das gleiche Differenzbild wie Figur 15, aber nach der Korrektur durch die Schaltung. Der Fehler wurde mit einer Korrekturtiefe von vier auf einen Maximalwert von 2 reduziert.

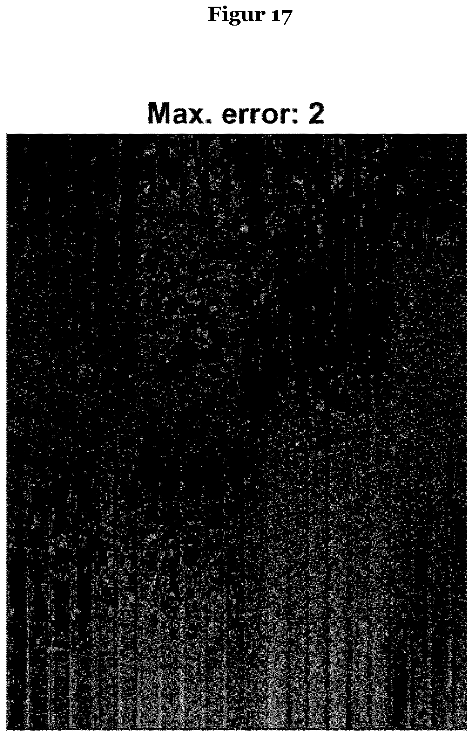

Figur 17 zeigt die gleiche Korrektur wie Figur 16, allerdings wurde dieses Bild mit einer Simulationssoftware berechnet. Es ist eine gute Übereinstimmung zwischen Software- und Hardware-basierter Korrektur zu erkennen.

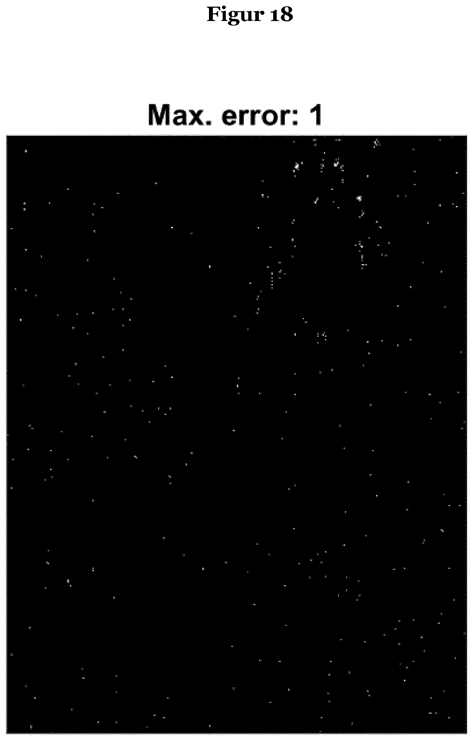

Figur 18 wurde so erzeugt wie das das Bild in Figur 17, allerdings mit einer Korrekturtiefe von 6 statt 4. Es sind nur noch einzelne Rundungsfehler zu erkennen. Der Maximale Fehler ist 1 in uint16.

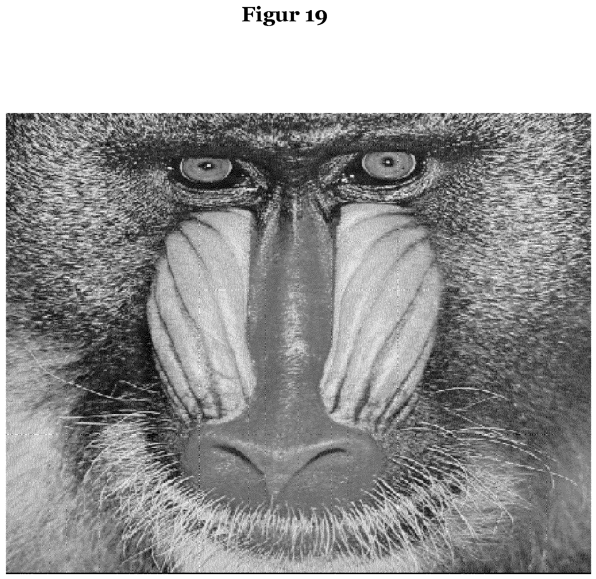

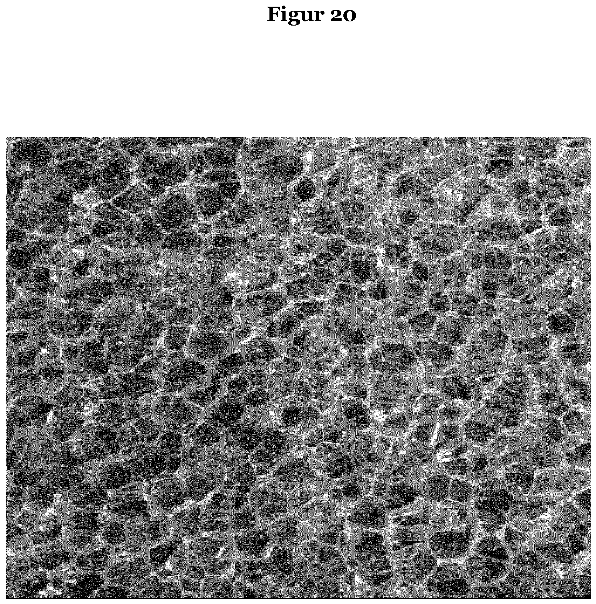

Figur 19 zeigt ein Testbild aus der SIPI-Database. Es diente als Erstes von 10 Testbildern zur Generierung von aperiodischem Smear. Quellenlink am Anmeldetag: http://sipi.usc.edu/database/download.php?vol=misc&img=4.2.03 Figur 20 zeigt ein Testbild aus der SIPI-Database. Es diente als Zweites von 10 Testbildern zur Generierung von aperiodischem Smear. Quellenlink am Anmeldetag: http://sipi.usc.edu/database/download.php?vol=textures&img=1.1.13)

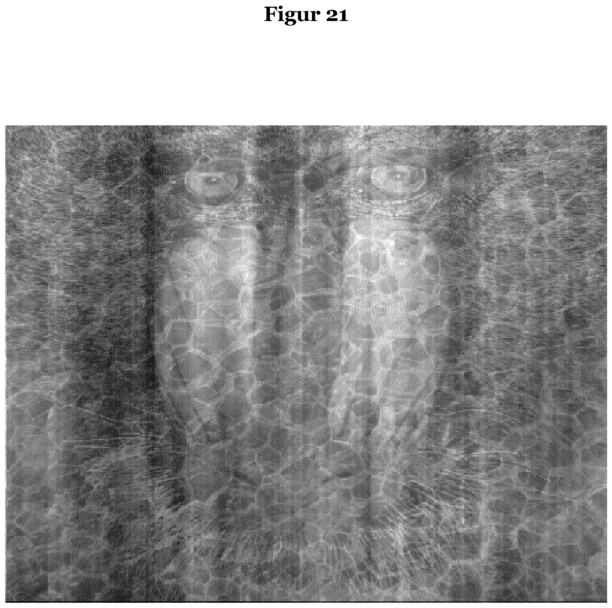

Figur 21 zeigt den Smear des Bildes der Figur 19 nach Degradierung im aperiodischen Fall mit realistischen Parametern.

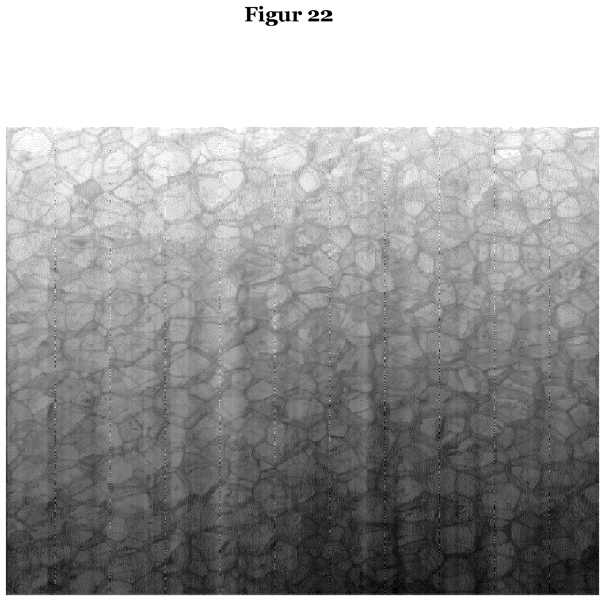

Figur 22 zeigt das Bild aus Figur 21 nach einer Korrektur mit einer Korrekturtiefe von 1.

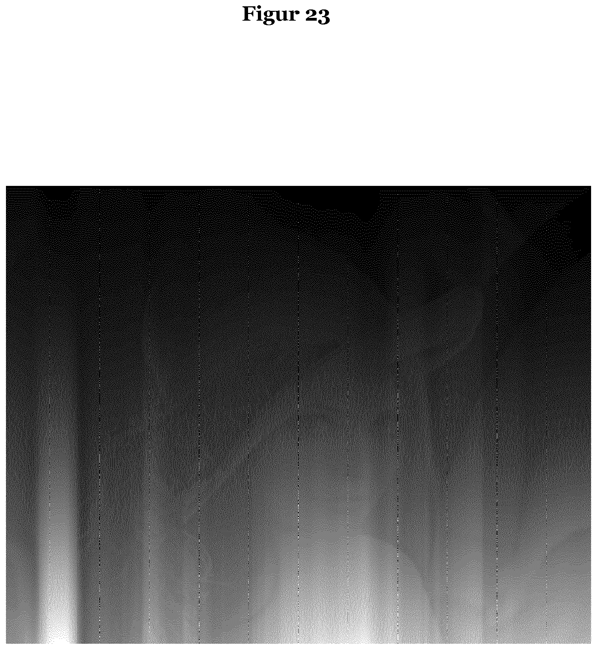

Figur 23 zeigt das Bild aus Figur 19 nach einer Korrektur mit einer Korrekturtiefe von 2, wodurch das nächste Bild der Reihe erkennbar wird.

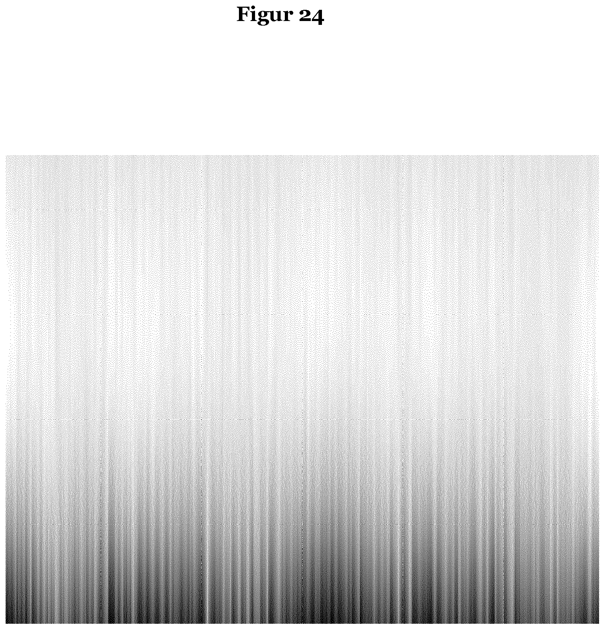

Figur 24 zeigt das Bild aus Figur 19 nach einer Korrektur mit einer Korrekturtiefe von 4.

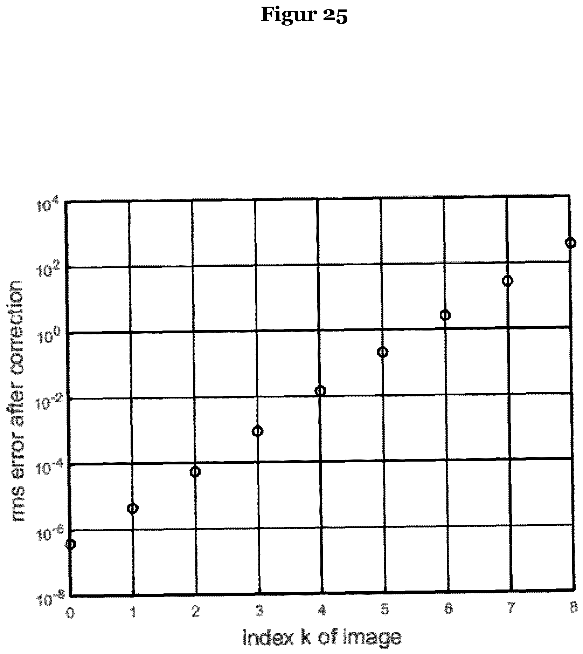

Figur 25 zeigt Simulationsergebnisse für die Annäherung des periodischen Falls an den aperiodischen Fall. Es ist der Index k innerhalb einer aperiodischen Bildfolge gegen den Fehler einer periodischen Korrektur aufgetragen. Es ist zu erkennen, dass das erste Bild mit k=0 sehr gut korrigiert ist und eine kleinen Fehler aufweist. Dieser Fehler steigt aber mit zunehmendem Index k. Diese Erkenntnis wurde für die Annäherung des aperiodischen Falls mit dem periodischen Fall verwendet.

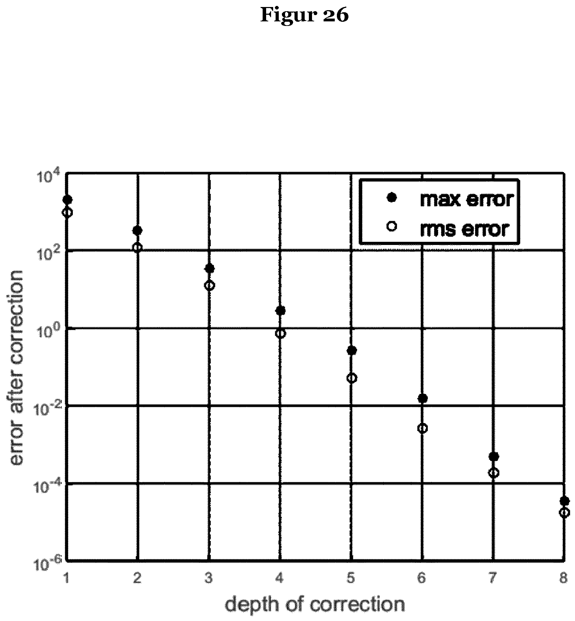

Figur 26 zeigt nun die periodisch approximierte Korrektur einer aperiodisch verschmierten Bildfolge. Korrigiert wurde immer das erste Bild einer Folge, jedoch mit variabler Korrekturtiefe. Es ist zu erkennen, dass die mit zunehmender Korrekturtiefe der maximale, absolute Fehler und der durchschnittliche Fehler sinken.

Zuletzt wurden Möglichkeiten zur Korrektur von Readout-Smear auf Prozessoren und Grafikkarten untersucht. Es hat sich gezeigt, dass die Prozessierung von Spalten oder die Möglichkeiten der beschriebenen Parallelisierung eine Berechnung auf Single-Instruction-Multiple-Data Architekturen begünstigt. Somit eignen sich Grafikkarten und Prozessoren mit Vektor-Befehlssätzen zum Ausführen genannter Implementierungen.

Die genannten Implementierungen von Hardware und Software sind in mehreren gewerblichen Anwendungen einsetzbar. Wissenschaftliche Sensoren benötigen hohe Füllfaktoren der Pixel, wodurch sich eine Notwendigkeit der Reduzierung sonstiger Strukturen auf dem Sensor ergibt. Da solche Strukturen auch zur Reduzierung von Readout-Smear dienen können, wie beispielsweise bei Interline-Transfer-CCDs, wird eine Software-Korrektur von Readout-Smear wichtig. Soll diese Korrektur dann unter Echtzeit erfolgen sind genannte Implementierungen leistungsfähiger und Ressourcensparender als der Stand der Technik, was wiederum ihren Einsatz und damit ihre gewerbliche Anwendung rechtfertigt. Weiter können genannte Implementierungen zum Einsatz kommen um die Latenz einer Bildkorrektur zu senken. Dies ist insbesondere in der Consumer-Fotographie wichtig, wo ein Anwender ein geschossenes Foto nach deutlich unter einer Sekunde betrachten will. Eine schnelle Korrektur kann hier Anwendung finden, da sie bei einer Megapixel-Auflösung wie in aktuellen Systemen einen Latenzvorteil von einem Faktor von ungefähr 10 erzielt. Anders herum können durch einen solchen Vorteil auch CCD-Sensoren in Endgeräten verbaut werden, in denen sie vorher keinen Einsatz hatten, beispielsweise in Smartphones. Hier ist genügend Rechenleistung für eine schnelle Korrektur vorhanden, so dass Readout-Smear bewusst zugelassen und innerhalb kurzer Zeit post-facto korrigiert werden kann.

**Patentansprüche**

1. Verfahren zur Korrektur von Smear-Artefakten, umfassend die Schritte:

   - Auslesen von erzeugten Ladungen aus einer Matrix von photosensitiven Elementen (CCD);
   - Umwandeln der ausgelesenen Ladungen in Bildwerte;
   - Bestimmen von Korrekturwerten zur Korrektur von Smear-Artefakten;
   - Transformieren der Bild- und der Korrekturwerte mit einer geeigneten Transformation; und

- Korrigieren der transformierten Bildwerte, basierend auf den transformierten Korrekturwerten.

2. Verfahren nach Anspruch 1, wobei die photosensitiven Elemente (CCD) in einer Framestore- oder einer Full-Frame-Architektur implementiert sind.

3. Verfahren nach Anspruch 1, **dadurch gekennzeichnet, dass** die transformierten Korrekturwerte mit den transformierten Bildwerten elementweise verrechnet werden.

4. Verfahren nach Anspruch 3, **dadurch gekennzeichnet, dass** die transformierten Korrekturwerte mit den transformierten Bildwerten multipliziert werden.

5. Verfahren nach Anspruch 3, **dadurch gekennzeichnet, dass** die transformierten Bildwerte durch die transformierten Korrekturwerte dividiert werden.

6. Verfahren nach Anspruch 1, **dadurch gekennzeichnet, dass** zumindest ein Korrekturwert zur Korrektur mehrerer Bildwerte in einem Bild verwendet wird.

7. Verfahren nach Anspruch 1, **dadurch gekennzeichnet, dass** die Korrekturwerte eine Toeplitz-Matrix bilden.

8. Verfahren nach Anspruch 7, **dadurch gekennzeichnet, dass** die Korrekturwerte eine zirkulante bzw. zyklische Matrix bilden.

9. Verfahren nach Anspruch 1, **dadurch gekennzeichnet, dass** die Korrekturwerte eine Hankel-Matrix bilden.

10. Verfahren nach Anspruch 1, **dadurch gekennzeichnet, dass** für die Transformation ein Faltungs-Multiplikationstheorem gilt.

11. Verfahren nach Anspruch 10, **dadurch gekennzeichnet, dass** die Transformation eine Fouriertransformation ist, insbesondere eine schnelle Fouriertransformation.

12. Verfahren nach Anspruch 10, **dadurch gekennzeichnet, dass** die Transformation eine z-Transformation ist.

13. Verfahren nach Anspruch 10, **dadurch gekennzeichnet, dass** die Transformation eine Sinus-Cosinus-Transformation ist.

14. Verfahren nach Anspruch 1, wobei die Korrektur von variablen Szenen durch die Annahme periodisch auftretender Szenen approximiert wird.

15. Verfahren nach Anspruch 1, wobei die Korrekturen unvollständig bis zu einer gewissen Korrekturtiefe ausgeführt werden.

16. Vorrichtung zur Korrektur von Smear-Artefakten, umfassend:

   - eine Schnittstelle zum Erhalten von Bildwerten;
   - eine Schnittstelle zum Erhalt von Korrekturwerten zur Korrektur von Smear-Artefakten;
   - einen Schaltkreis zum Transformieren der Bild- und der Korrekturwerte mit einer geeigneten Transformation; und
   - einen Schaltkreis zum Anwenden der transformierten Korrekturwerte auf die transformierten Bildwerte,

   wobei die Vorrichtung dazu eingerichtet ist, ein Verfahren nach Patentanspruch 1 durchzuführen.

17. Vorrichtung nach Anspruch 1, wobei die Korrekturwerte in einem Speicher abgelegt sind.

Start
0110

Neue Kameraeinstellung

Bestimmen der
Korrekturwerte
0121

Ladungserzeugung
mittels CCD ohne
Shutter
0131

Neue Fotographie

Weitere
Bildwerte

Transformation der
Korrekturwerte
0122

Erzeugung der
Bildwerte
0132

Bildwerte
0133

Neue Korrektur

Speicher für
Korrekturwerte
0123

Transformation der
Bildwerte
0134

Anwendung der
Bildwerte
0135

Rück-transformation
der Bildwerte
0136

Korrigierte
Bildwerte
0137

Ende
0140

Fig. 1

Fig. 2

Bilderzeugung
0350

| Element 1 0340 | Element 2 0340 | Element 3 0340 |
| Element 4 0340 | Element 5 0340 | Element 6 0340 |
| Element 7 0340 | Element 8 0340 | Element 9 0340 |

Framestore
Matrix
0330

| Element 1 0320 | Element 2 0320 | Element 3 0320 |
| Element 4 0320 | Element 5 0320 | Element 6 0320 |
| Element 7 0320 | Element 8 0320 | Element 9 0320 |

Photosensitive
Matrix
0310

Fig. 3

EP 3 383 027 A1

**Sphäre 0410**

| Framestore Matrix 2 0412 |
| Photosensitive Matrix 2 0411 |
| Photosensitive Matrix 1 0411 |
| Framestore Matrix 1 0412 |

Halb-Spalte 0420

Schiebe-Richtung 0430

Auslese-Richtung 0440

Zeit

Szene k    Szene k+1

Szenenwechsel 0470

Einschieben 0450

Belichtung 0460

Ausschieben 0480

$\delta$    1    $\alpha$    $\delta$

Relativer Anteil an der Belichtungszeit 0490

**Figur 4**

# Figur 5

# Figur 6

# Figur 7

Fig. 8

Speicherschnittstelle 0940

FIFO 0930

Ethernet Entpaketierer 0920

Ethernet Paketierer 0950

Ethernet Paket Generator 0970

MUX 0960

MAC 0912

PHY 0911

Port 0910

Fig. 9

Fig. 10

Addition und IFFT 1040

FFT und Korrektur 1030

Berechnungskanal 1 1020

FFT und Korrektur 1030

Berechnungskanal 1 1020

Sphärenberechnung 1 1010

Berechnungskanal 2 1020

Sphärenberechnung 1 1010

Sphärenberechnung 2 1010

Figur 11

# Figur 12

Signal-
Trennung
1250

MUX
1240

Block RAM 0
1230

Block RAM 1
1230

Cast mit
Division
1220

FFT
1210

k

k+1

## Figur 13

## Figur 14

Ethernet Paketierer 1440

Speicherschnittstelle 1420 und Sphärenberechnung 1430

Ethernet Entpaketierer 1410

Ethernet user clock — 156.25 MHz

c0 packing clock

c1 packing clock — 250 MHz

c0 memory user clock

c1 memory user clock — 225 MHz

Ethernet user clock — 156.25 MHz

# Figur 15

Max. error: 3783

**Figur 16**

Max. error: 2

**Figur 17**

Max. error: 2

**Figur 18**

Max. error: 1

**Figur 19**

Figur 20

Figur 21

**Figur 22**

**Figur 23**

**Figur 24**

# Figur 25

# Figur 26

Europäisches Patentamt

European Patent Office

Office européen des brevets

# EUROPÄISCHER RECHERCHENBERICHT

Nummer der Anmeldung

EP 18 16 5190

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Francisco Andres Iglesias: "Development of high-cadence, high precision solar imaging polarimeter with application to the FSP prototype", 12. April 2016 (2016-04-12), uni-edition GmbH, Germany, XP002782977, ISBN: 978-3-944072-50-0 Seiten 78-86, * Seite 80, Absatz 5.2.1 - Seite 86 * ----- | 1-17 | INV. H04N5/359 |
| X | KEITH POWELL ET AL: "Restoration and frequency analysis of smeared CCD images", APPLIED OPTICS, Bd. 38, Nr. 8, 10. März 1999 (1999-03-10), Seiten 1343-4850, XP055483822, WASHINGTON, DC; US ISSN: 0003-6935, DOI: 10.1364/AO.38.001343 * das ganze Dokument * ----- | 1-15 | |
| X | FRANCISCO A IGLESIAS ET AL: "Smear correction of highly-variable, frame-transfer-CCD images with application to polarimetry", ARXIV.ORG, CORNELL UNIVERSITY LIBRARY, 201 OLIN LIBRARY CORNELL UNIVERSITY ITHACA, NY 14853, 11. Juni 2015 (2015-06-11), XP080795880, DOI: 10.1364/AO.54.005970 * das ganze Dokument * ----- | 1-15 | RECHERCHIERTE SACHGEBIETE (IPC) H04N |

Der vorliegende Recherchenbericht wurde für alle Patentansprüche erstellt

| Recherchenort | Abschlußdatum der Recherche | Prüfer |
|---|---|---|
| München | 12. Juli 2018 | Fernández Cuenca, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 8169515 B2

**In der Beschreibung aufgeführte Nicht-Patentliteratur**

*   **K. POWELL ; D. CHANA ; D. FISH ; C. THOMP-SON.** Restoration and frequency analysis of smeared CCD images. *Applied Optics,* 1999, vol. 38 (8), 1343-1347
*   **W. RUYTEN.** Smear correction for frame transfer charge-coupled-device cameras. *Optics Letters,* 01. Juli 1999, vol. 24, 878-880
*   **F.A. IGLESIAS ; A. FELLER ; K. NAGARAJU.** Smear correction of highly variable, frame-transfer CCD images with application to polarimetry. *Applied Optics,* Juni 2015, vol. 54 (19